# EUROPÄISCHE PATENTSCHRIFT

(11) **EP 3 096 949 B1**
(45) Veröffentlichungstag und Bekanntmachung des Hinweises auf die Patenterteilung: **29.04.2020**
(21) Anmeldenummer: 15702180.9
(22) Anmeldetag: 21.01.2015
(51) Int. Cl.: B60N 2/75, B60N 2/68, B29C 45/14

(54) **ARMLEHNENRAHMEN, ARMLEHNE UND VERFAHREN ZUR HERSTELLUNG EINES ARMLEHNENRAHMENS**
ARM REST FRAME, ARM REST AND METHOD FOR PRODUCING AN ARM REST FRAME
CADRE D'ACCOUDOIR, ACCOUDOIR, ET PROCÉDÉ DE PRODUCTION D'UN CADRE D'ACCOUDOIR

(30) Priorität: 21.01.2014 DE 102014201033
(43) Veröffentlichungstag der Anmeldung: 30.11.2016
(73) Patentinhaber: Adient Luxembourg Holding S.à r.l., 1855 Luxembourg (LU)
(72) Erfinder: JONAS, Jörg, 42489 Wülfrath (DE); MEIER, Bernd, 57439 Attendorn (DE); MARTINKA, Michal, 91501 Nove Mesto n. V. (SK); MUELLER, Ronny, 50374 Erftstadt (DE); WEGE, Lutz, 42655 Solingen (DE)
(74) Vertreter: Finger, Catrin
(86) Internationale Anmeldenummer: PCT/EP2015/051160
(87) Internationale Veröffentlichungsnummer: WO 2015/110482

(56) Entgegenhaltungen:
- WO-A1-03/016091
- WO-A1-2012/032189
- WO-A2-2013/127972
- JP-A- 2000 070 070
- KR-B1- 101 049 454
- US-A- 2 042 587

## Beschreibung

Die Erfindung betrifft einen Armlehnenrahmen gemäß dem Oberbegriff des Anspruchs 1.

Die Erfindung betrifft weiterhin eine einen solchen Armlehnenrahmen umfassende Armlehne.

Ferner betrifft die Erfindung ein Verfahren zur Herstellung eines Armlehnenrahmens gemäß dem Oberbegriff des Anspruchs 4.

Aus dem Stand der Technik sind allgemein Armlehnen für Fahrzeuge bekannt, welche einen aus mehreren Bauteilen gebildeten und mit einem Bezug versehenen Armlehnenrahmen umfassen. Weiterhin sind Verfahren zur Herstellung von Armlehnen und Armlehnenrahmen bekannt.

Die KR10-1049454 B1 beschreibt einen Armlehnenrahmen mit mehreren Rahmenbauteilen, welche gemeinsam in einem Spritzgussverfahren erzeugt und aus einem verstärkten Gießharz-Verbundwerkstoff gebildet werden. Weiterhin wird ein Verfahren zur Herstellung des Armlehnenrahmens und eine Armlehne, umfassend einen solchen Armlehnenrahmen beschrieben. Die Armlehne umfasst weiterhin eine aus Metall gebildete Gelenkanordnung, mittels welcher die Armlehne klappbar an einer Sitzlehne eines Fahrzeugsitzes anordbar ist.

Weiterhin ist aus der US 2 042 587 A eine Armlehnenanordnung mit einer Armlehne und Verstärkungsbauteilen bekannt, wobei die Armlehne und die Verstärkungsbauteile aus einem thermoplastischen Faserwerkstoff als Faserplatten gebildet sind, wobei die Faserplatten Zellulosefasern umfassen, welchen durch ein thermoplastisches Bindemittel miteinander verbunden sind.

Aufgabe der vorliegenden Erfindung ist es, einen gegenüber dem Stand der Technik verbesserten Armlehnenrahmen, eine einen solchen Armlehnenrahmen umfassende Armlehne und ein verbessertes Verfahren zur Herstellung eines Armlehnenrahmens anzugeben.

Hinsichtlich des Armlehnenrahmens wird die Aufgabe durch die im Anspruch 1 angegebenen Merkmale, hinsichtlich der Armlehne durch die im Anspruch 3 angegebenen Merkmale und hinsichtlich des Verfahrens durch die im Anspruch 4 angegebenen Merkmale gelöst.

Vorteilhafte Ausgestaltungen der Erfindung sind Gegenstand der Unteransprüche.

Der Armlehnenrahmen, insbesondere für eine Armlehne eines Fahrzeugs, umfasst zumindest ein Rahmenbauteil. Erfindungsgemäß ist das zumindest eine Rahmenbauteil aus einem Organoblech gebildet.

Unter Organoblechen werden vorliegend endlosfaserverstärkte Thermoplastplatten verstanden. Das heißt, Organobleche sind so genannte Faser-Matrix-Halbzeuge, welche ein in eine thermoplastische Kunststoffmatrix eingebettetes Fasergewebe oder Fasergelege umfassen.

Die Vorteile der thermoplastischen Matrix liegen in der Warmumformfähigkeit der Halbzeuge und daraus resultierenden kürzeren Prozesszeiten im Vergleich zu konventionellen duroplastischen Faserverbundwerkstoffen und metallischen Werkstoffen. Daraus resultieren besonders kurze Prozesszeiten. Auch sind durch Auswahl der Fasergewebe oder Fasergelege die mechanischen Eigenschaften, wie beispielsweise Steifigkeit, Festigkeit und Wärmeausdehnung des Organoblechs und somit des Rahmenbauteils einfacher und genauer einstellbar, als bei metallischen Bauteilen.

Somit kann gegenüber aus dem Stand der Technik bekannten und aus metallischen Rahmenbauteilen gebildeten Armlehnenrahmen bei gleicher oder verbesserter mechanischer Stabilität eine signifikante Verringerung des Gewichts des Armlehnenrahmens erzielt werden.

An dem als Organoblech ausgebildeten Rahmenbauteil ist eine Rippenstruktur ausgebildet, welche beispielsweise in einem Spritzwerkzeug angeformt wird, so dass zwischen dem Organoblech und der Rippenstruktur eine stoffschlüssige Verbindung ausgebildet ist, wodurch ein einstückiges Bauteil gebildet ist. Da das Organoblech eine thermoplastische Matrix besitzt, kann es aufgeschmolzen und mit dem gleichen Thermoplast umspritzt werden. Hierbei wird zwischen zwei Verfahren unterschieden. Beim ersten Verfahren werden vorgeformte Organobleche in ein Spritzwerkzeug eingelegt und mit dem Thermoplast umspritzt. Beim zweiten Verfahren erfolgt die Umformung des Organoblechs direkt im Spritzwerkzeug. Die Rippenstruktur ermöglicht bei hoher Festigkeit und Steifigkeit des Rahmenbauteils ein geringeres Bauteilgewicht im Vergleich zu herkömmlichen, insbesondere aus Metall gebildeten Rahmenbauteilen.

In einer möglichen Ausgestaltung des Armlehnenrahmens ist an dem Rahmenbauteil zumindest ein Achskörper zur Bildung einer Schwenkachse angeordnet. Somit ist eine den Armlehnenrahmen umfassende Armlehne um zumindest eine Schwenkachse schwenkbar.

Die erfindungsgemäße Armlehne, insbesondere für ein Fahrzeug, umfasst einen erfindungsgemäßen Armlehnenrahmen oder Weiterbildungen desselben. Somit zeichnet sich die Armlehne gegenüber aus dem Stand der Technik bekannten Armlehnen bei gleicher oder verbesserter mechanischer Stabilität durch ein signifikant verringertes Gewicht aus. Gleichzeitig ist die Armlehne aufgrund der kurzen Prozesszeiten sehr kostengünstig herstellbar.

In dem Verfahren zur Herstellung eines Armlehnenrahmens, insbesondere für eine Armlehne eines Fahrzeugs, wird zumindest ein Rahmenbauteil des Armlehnenrahmens aus einem Organoblech gebildet. Aufgrund der Bildung des Rahmenbauteils aus dem Organoblech zeichnet sich das Verfahren durch besonders kurze Prozesszeiten aus. Dabei können durch Auswahl der Fasergewebe oder Fasergelege die mechanischen Eigenschaften des Organoblechs und somit des Rahmenbauteils einfacher und sehr genau eingestellt werden.

Gemäß einer möglichen Weiterbildung des Verfahrens wird zumindest ein Rahmenbauteil des Armlehnenrahmens in einem so genannten "One-Shot-Verfahren" hergestellt. Hierbei wird das Bauteil erwärmt und in einem Spritzgusswerkzeug vorgeformt und mit einem Thermoplast umspritzt. Somit kann in einfacher Weise zwischen dem Organoblech und dem Thermoplast eine stoffschlüssige Verbindung ausgebildet werden, wodurch ein einstückiges homogenes Bauteil mit hoher mechanischer Stabilität ohne Fügestellen gebildet wird.

In einer möglichen Ausgestaltung wird in dem One-Shot-Verfahren mit dem Thermoplast eine Rippenstruktur ausgebildet, so dass zwischen dem Organoblech und der Rippenstruktur eine stoffschlüssige Verbindung ausgebildet wird. Mittels der Rippenstruktur wird eine Stabilität des Rahmenbauteils bei geringerem Gewicht erhöht. Somit kann ohne Einbußen hinsichtlich der Festigkeit und Steifigkeit des Rahmenbauteils das Bauteilgewicht im Vergleich zu herkömmlichen, insbesondere aus Metall gebildeten Rahmenbauteilen signifikant reduziert werden. Des Weiteren zeichnet sich das Verfahren durch eine besonders geringe Anzahl von Prozessschritten bei der Herstellung aus, so dass die Produktivität erhöht und die Stückkosten gesenkt werden.

In einer weiteren möglichen Ausgestaltung wird während der Umformung des Organoblechs zumindest eine Anschlussgeometrie, beispielsweise eine Aufnahme für einen Achskörper zur Bildung zumindest einer Schwenkachse und/oder zumindest eine Befestigungsgeometrie, aus- und/oder angeformt. Diese Erzeugung der Anschlussgeometrie während der Umformung ermöglicht eine weitere Reduktion der Prozessschritte bei der Herstellung des Armlehnenrahmens.

Ausführungsbeispiele der Erfindung werden im Folgenden anhand von Zeichnungen näher erläutert.

Dabei zeigen:
- Figur 1: schematisch eine perspektivische Ansicht eines oberen Teils eines Armlehnenrahmens nach dem Stand der Technik,
- Figur 2: schematisch eine perspektivische Ansicht eines unteren Teils für einen Armlehnenrahmen nach dem Stand der Technik,
- Figur 3: schematisch eine perspektivische Ansicht aus dem oberen Teil und dem unteren Teil gemäß den Figuren 1 und 2 gebildeten Armlehnenrahmens nach dem Stand der Technik,
- Figur 4: schematisch eine perspektivische Ansicht eines Armlehnenrahmens nach dem Stand der Technik,
- Figur 5: schematisch eine Explosionsdarstellung des Armlehnenrahmens gemäß Figur 4,
- Figur 6: schematisch einen Querschnitt des Armlehnenrahmens gemäß Figur 4,
- Figur 7: schematisch eine Draufsicht des Armlehnenrahmens gemäß Figur 4,
- Figur 8: schematisch eine erste perspektivische Ansicht eines Ausführungsbeispiels eines erfindungsgemäßen Armlehnenrahmens,
- Figur 9: schematisch eine zweite perspektivische Ansicht des Armlehnenrahmens gemäß Figur 8,
- Figur 10: schematisch eine Explosionsdarstellung des Armlehnenrahmens gemäß Figur 8, und
- Figur 11: schematisch eine Schnittdarstellung des Armlehnenrahmens gemäß Figur 8.

Einander entsprechende Teile sind in allen Figuren mit den gleichen Bezugszeichen versehen.

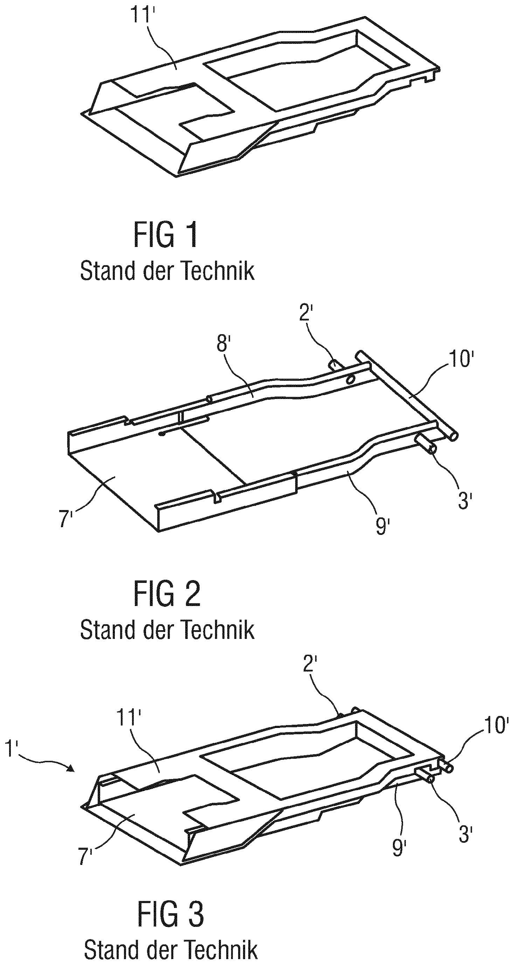

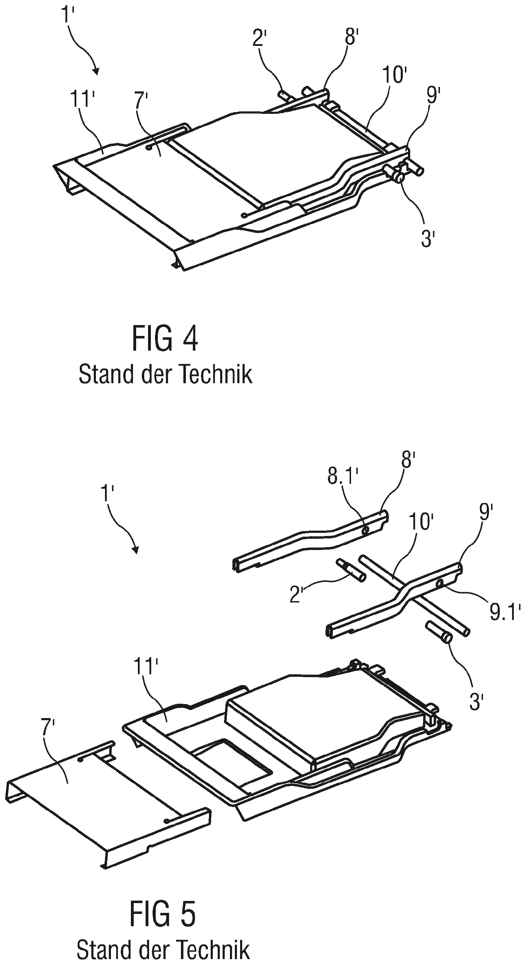

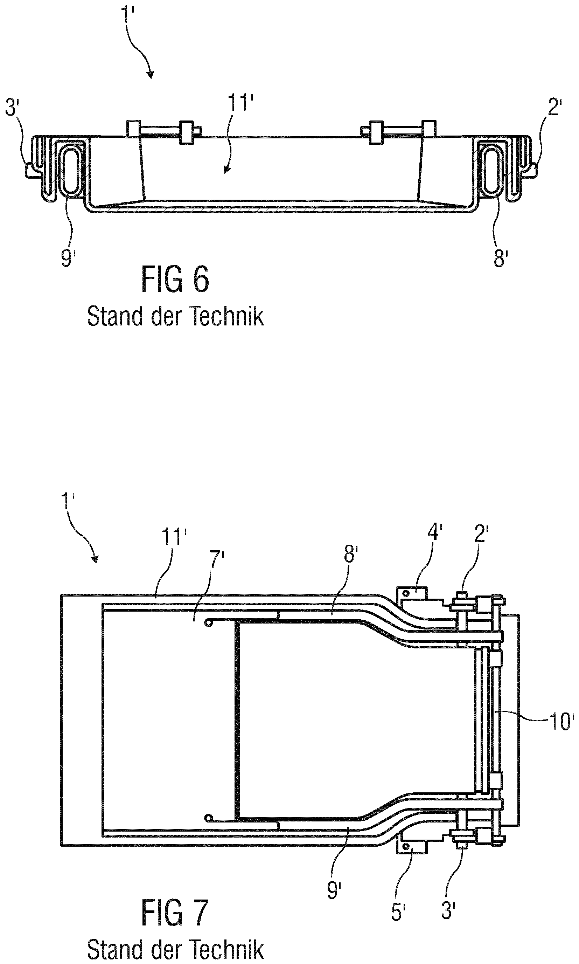

Die Figuren 1 bis 7 zeigen in einer perspektivischen Ansicht einen oberen Teil (Figur 1) und einen unteren Teil (Figur 2) eines Armlehnenrahmens 1' (Figur 3) sowie den Armlehnenrahmen 1' für eine Armlehne nach dem Stand der Technik. Die Armlehne ist dabei für eine Verwendung innerhalb eines Fahrzeugs vorgesehen. Dabei ist die Armlehne klappbar ausgebildet. Zur Realisierung dieses Klappmechanismus sind zwei Achskörper 2', 3' fahrzeugfest anordbar, wobei die Armlehne in ihrer Gesamtheit um eine durch die Achskörper 2', 3' vorgegebene erste Schwenkachse schwenkbar ist. Zur Realisierung dieses Klappmechanismus sind die zwei Achskörper 2', 3' mittels jeweils eines Befestigungselements 4', 5' fahrzeugfest anordbar.

Der untere Teil des Armlehnenrahmens 1' ist aus einem ersten Rahmenbauteil 7' sowie einem mit diesem verbundenen zweiten Rahmenbauteil 8' und dritten Rahmenbauteil 9' gebildet, wobei das zweite und dritte Rahmenbauteil 8', 9' jeweils als gekröpftes Profilelement ausgebildet und fest mit dem ersten Rahmenbauteil 7' verbunden sind.

Zusätzlich ist ist ein weiterer Achskörper 10' vorgesehen, welcher als Anschlagelement zur Begrenzung eines Schwenkweges und somit eines Schwenkwinkels der Armlehne um die Achskörper 2', 3' ausgebildet ist. Die Rahmenbauteile 7', 8', 9' und die Achskörper 2', 3', 10' sind dabei aus Metall gebildet, insbesondere miteinander verschweißt und bilden eine tragende Struktur für die Armlehne.

Der weitere Achskörper 10' ist dabei an dem oberen Teil des Armlehnenrahmens 1' angeordnet, wobei der obere Teil des Armlehnenrahmens 1' aus einem vierten Rahmenbauteil 11' gebildet ist. Das vierte Rahmenbauteil 11' ist beispielsweise als Kunststoff-Spritzgussteil ausgebildet und bildet ein Staufach der Armlehne. Weiterhin ist das vierte Rahmenbauteil 11' zur Befestigung weiterer, nicht näher dargestellter Bauteile der Armlehne, beispielsweise eines Staufachdeckels, eines Schaumteils, eines Bezugs, eines Dosen- und/oder Flaschenhalters, eines Ablagefaches und/oder weiterer Bauteile, ausgebildet.

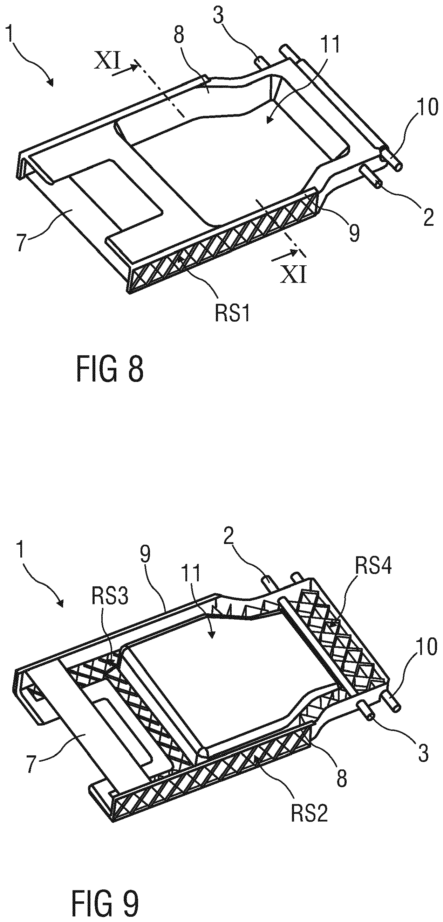

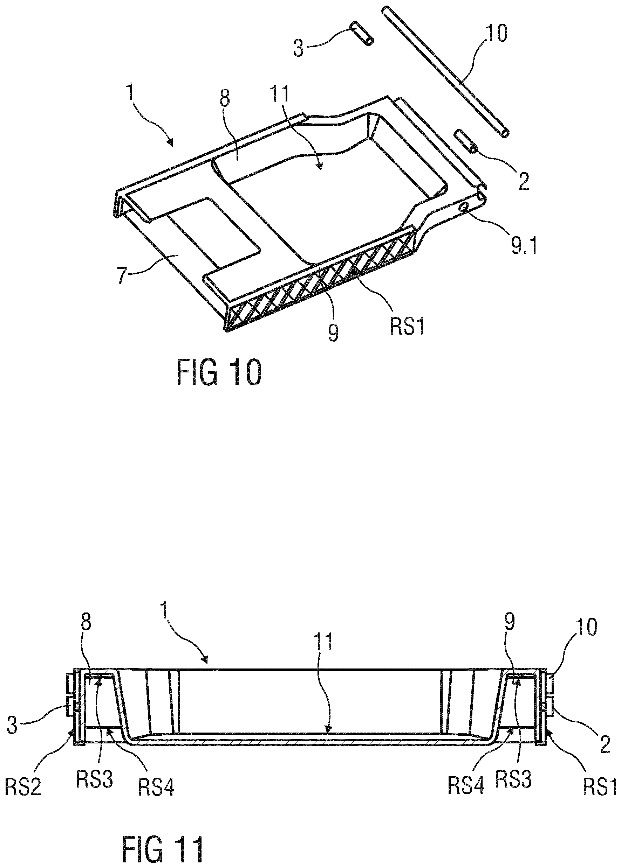

In den Figuren 8 bis 11 ist in verschiedenen Ansichten ein mögliches Ausführungsbeispiel eines erfindungsgemäßen Armlehnenrahmens 1 für eine Armlehne dargestellt. Die Armlehne ist dabei für eine Verwendung innerhalb eines Fahrzeugs zwischen zwei Vordersitzen oder zwei Rücksitzen vorgesehen. Insbesondere ist die Armlehne klappbar ausgebildet. Zur Realisierung dieses Klappmechanismus sind zwei Achskörper 2, 3 fahrzeugfest anordbar, wobei die Armlehne in ihrer Gesamtheit um eine durch die Achskörper 2, 3 vorgegebene erste Schwenkachse schwenkbar ist. Ein weiterer Achskörper 10 ist als Anschlagelement zur Begrenzung eines Schwenkweges und somit eines Schwenkwinkels der Armlehne um die Achskörper 2', 3' ausgebildet.

Im Unterschied zu dem in den Figuren 1 bis 7 dargestellten Armlehnenrahmen 1' nach dem Stand der Technik umfasst der Armlehnenrahmen 1 Rahmenbauteile 8, 9, 11, welche aus einem so genannten Organoblech gebildet sind.

Das Organoblech ist ein herkömmliches Organoblech. Ein Organoblech ist ein flächiges Halbzeug aus einem thermoplastischen Kunststoff, in welchen ein Gewebe aus Glas-, Carbon- und/oder Aramidfasern oder einer Mischform aus diesen derart eingebracht ist, dass die Fasern vollständig mit thermoplastischem Kunststoff benetzt und umhüllt sind. Organobleche sind somit endlosfaserverstärkte Thermoplastplatten. Organobleche können durch Erwärmung und anschließendes Pressen in kurzen Zykluszeiten zu dreidimensionalen Bauteilen umgeformt werden.

Dabei können in besonders einfacher Weise bei der Umformung verschiedene Anschlussgeometrien, wie beispielsweise Aufnahmen 9.1 für die Achskörper 2, 3 und nicht näher dargestellte weitere Befestigungsgeometrien aus- oder angeformt werden.

Somit wird gegenüber dem in den Figuren 1 bis 7 dargestellten Armlehnenrahmen 1' nach dem Stand der Technik eine signifikante Vereinfachung der Konstruktion des Armlehnenrahmens 1 erzielt, wobei Funktionen der Rahmenbauteile 7 bis 9, 11 in ein gemeinsames Bauteil integriert sind. Hierbei wird ohne Einbußen bei einer mechanischen Stabilität eine hohe Gewichtsersparnis erreicht.

Im dargestellten Ausführungsbeispiel sind die Rahmenbauteile 8, 9, 11 aus einem Organoblech gebildet, welches beispielsweise ein Dicke von 1,5 mm aufweist. Insbesondere sind die Rahmenbauteile 8, 9, 11 aus einem einstückigen Organoblech gebildet, so dass ein homogenes Bauteil ohne Fügestellen mit besonders hoher mechanischer Stabilität gebildet werden kann.

Weiterhin sind an den aus dem Organoblech gebildeten Rahmenbauteilen 8, 9, 11 an einer Unterseite und an äußeren Seitenbereichen Rippenstrukturen RS1 bis RS4 ausgebildet, wobei zwischen Organoblech und Rippenstruktur RS1 bis RS4 eine stoffschlüssige Verbindung ausgebildet wird, so dass ein einstückiges Rahmenbauteil 11 gebildet ist.

Dabei können mittels der Rippenstrukturen RS1 bis RS4 partielle Versteifungen durch Hinterspritzung des Organoblechs erreicht werden. Sind bestimmte Lastpfade oder Krafteinleitungspunkte hohen Kräften ausgesetzt, so können diese durch zusätzliche Hinterspritzung, beispielsweise eine Wandaufdickung und/oder eine Verrippung, verstärkt werden. In dieser Hinterspritzung wird vorzugsweise auch das Rahmenbauteil 7 erzeugt, welches als Quersteg zur mechanischen Stabilisierung der Rahmenbauteile 8, 9 vorgesehen ist und diese in einem vorderen, von den Achskörpern 2, 3 abgewandten Bereich verbindet.

Weiterhin kann eine Wandstärke gegenüber herkömmlichen Rahmenbauteilen bei gleicher Belastbarkeit verringert werden. Somit sind derart hergestellte Rahmenbauteile 7 bis 9 und 11 vorteilhafterweise gewichtsreduziert und besonders biegesteif. Hierbei kann eine signifikante Gewichtseinsparung von beispielsweise bis zu 30 Prozent gegenüber herkömmlichen Rahmenbauteilen 7 bis 9 und 11 für Armlehnen erreicht werden.

Zur weiteren Erhöhung der Festigkeit und Verwindungssteifigkeit sind innerhalb der Rippenstrukturen RS1 bis RS4 die einzelnen Rippen überkreuzt angeordnet. Dabei ist eine Anordnung bzw. ein Muster der Rippenstrukturen RS1 bis RS4, eine Höhe der Rippenstrukturen RS1 bis RS4, eine Dicke der Rippen, sowie Positionen derselben belastungsgerecht, d. h. an eine spätere mechanische Belastung des Armlehnenrahmens 1 angepasst, ausgebildet. Dabei können die Rippenstrukturen RS1 bis RS4 jeweils unterschiedliche Höhen, Dicken und Muster aufweisen, wobei sowohl die Höhe als auch die Dicke der Rippen der Rippenstrukturen RS1 bis RS4 allmählich größer oder kleiner werden können. Somit ist es insbesondere bei variabler Höhe möglich, Freiräume mit unterschiedlicher Höhe zwischen den Rahmenelementen 7 bis 8, 11 auszugleichen. Derartige unterschiedliche Höhen der Freiräume resultieren beispielsweise aus unterschiedlichen Höhen und Anordnungen der Rahmenelemente 7 bis 8, 11.

Beispielsweise weisen die Rippen der Rippenstrukturen RS1 bis RS4 eine Dicke von 2 mm auf.

Im dargestellten Ausführungsbeispiel ist die Rückseite des Rahmenbauteils 11, ausgenommen der das Staufach bildende Bereich, vollständig mit den Rippenstrukturen RS3, RS4 versehen, wobei die Rippenstrukturen RS3, RS4 zur Stabilisierung auch zwischen dem das Staufach bildenden Bereich des Rahmenbauteils 11 und den Rahmenbauteilen 8, 9 ausgebildet sind. Die Rippenstrukturen RS1, RS2 sind jeweils an einer Außenseite der Rahmenbauteile 8, 9 ausgebildet.

Insbesondere sind die Rippenstrukturen RS1 bis RS4 aus einem thermoplastischen Kunststoff gebildet, welcher mit dem Material des Organoblechs eine stoffschlüssige Verbindung ausbildet.

Insbesondere erfolgt die Herstellung der Rahmenbauteile 7 bis 8 und 11 in einem so genannten "One-Shot-Verfahren". Hierbei wird eine Umformung des Organoblechs und die Erzeugung der Rippenstrukturen RS1 bis RS4 mittels des Spritzgussverfahrens in einem Spritzgusswerkzeug durchgeführt, indem die thermoplastische Matrix des Organoblechs in dem Spritzwerkzeug aufgeschmolzen und beispielsweise mit dem gleichem Thermoplast umspritzt wird. Auf diese Weise werden die Rippenstrukturen RS1 bis RS4, welche beispielsweise aus dem gleichen thermoplastischen Kunststoff wie das Organoblech bestehen, auf das Organoblech aufgebracht, so dass aus Organoblech und den Rippenstrukturen RS1 bis RS4 ein integriertes und somit einstückiges Bauteil gebildet wird, welche die Rahmenbauteile 7 bis 9 und 11 umfasst. Auch werden durch die Durchführung des so genannten "One-Shot-Verfahrens" eine Werkzeuganzahl und eine Anzahl an Verarbeitungsschritten signifikant reduziert.

Im dargestellten Ausführungsbeispiel sind die Achskörper 2, 3 mit einem Durchmesser von 10 mm aus Vollmaterial gebildet und der Achskörper 10 als Rohr mit einem Außendurchmesser von 10 mm und einer Wandstärke von 1,5 mm. Dabei sind die Achskörper 2, 3 und 10 beispielsweise aus Metall gebildet.

### Bezugszeichenliste

- 1: Armlehnenrahmen
- 1': Armlehnenrahmen (Stand der Technik)
- 2: Achskörper
- 2': Achskörper (Stand der Technik)
- 3: Achskörper
- 3': Achskörper (Stand der Technik)
- 4': Befestigungselement
- 5': Befestigungselement
- 7: Rahmenbauteil
- 7': Rahmenbauteil (Stand der Technik)
- 8: Rahmenbauteil
- 8.1: Aufnahme
- 8': Rahmenbauteil (Stand der Technik)
- 9: Rahmenbauteil
- 9': Rahmenbauteil (Stand der Technik)
- 10: Achskörper
- 10': Achskörper (Stand der Technik)
- 11: Rahmenbauteil
- 11': Rahmenbauteil (Stand der Technik)

- RS1: Rippenstruktur
- RS2: Rippenstruktur
- RS3: Rippenstruktur
- RS4: Rippenstruktur

## Patentansprüche

1. Armlehnenrahmen (1), umfassend mehrere
Rahmenbauteile (7, 8, 9, 11),
**dadurch gekennzeichnet, dass**
- das mehrere Rahmenbauteile (8, 9, 11) aus einem einstückigen Organoblech gebildet sind,
- wobei das Organoblech eine thermoplastische Matrix umfasst, in welche ein Gewebe aus Glas-, Carbon- und/oder Aramidfasern oder eine Mischform aus diesen derart eingebracht ist, dass diese vollständig mit thermoplastischem Kunststoff benetzt und umhüllt sind,
- wobei an dem Organoblech eine Rippenstruktur (RS1 bis RS4) ausgebildet ist,
- wobei zwischen dem Organoblech und der Rippenstruktur (RS1 bis RS4) eine stoffschlüssige Verbindung ausgebildet ist und die thermoplastische Matrix und die Rippenstruktur (RS1 bis RS4) aus dem gleichen Material gebildet sind, so dass ein einstückiges Rahmenbauteil (11) gebildet ist,
- wobei das einstückige Rahmenbauteil (11) einen ein Staufach bildenden Bereich umfasst,
- wobei eine Rückseite des einstückigen Rahmenbauteils (11), ausgenommen der das Staufach bildende Bereich, vollständig mit den Rippenstrukturen (RS3, RS4) versehen ist.

2. Armlehnenrahmen (1) nach Anspruch 1,
**dadurch gekennzeichnet, dass** an dem Rahmenbauteil (7, 8, 9, 11) zumindest ein Achskörper (2, 3, 10) zur Bildung einer Schwenkachse angeordnet ist.

3. Armlehne, umfassend einen Armlehnenrahmen (1) nach Anspruch 1 oder 2.

4. Verfahren zur Herstellung eines Armlehnenrahmens (1) mit mehreren Rahmenbauteilen (7, 8, 9, 11),
**dadurch gekennzeichnet, dass** mehrere Rahmenbauteile (8, 9, 11) aus einem Organoblech gebildet werden,
- wobei das Organoblech eine thermoplastische Matrix umfasst, in welche ein Gewebe aus Glas-, Carbon- und/oder Aramidfasern oder eine Mischform aus diesen derart eingebracht wird, dass diese vollständig mit thermoplastischem Kunststoff benetzt und umhüllt werden,
- wobei an dem Organoblech in einem Spritzwerkzeug eine Rippenstruktur (RS1 bis RS4) angeformt wird,
- wobei zwischen dem Organoblech und der Rippenstruktur (RS1 bis RS4) eine stoffschlüssige Verbindung ausgebildet wird und die thermoplastische Matrix und die Rippenstruktur (RS1 bis RS4) aus dem gleichen Material gebildet werden, so dass ein einstückiges Rahmenbauteil (11) gebildet wird,
- wobei das einstückige Rahmenbauteil (11) einen ein Staufach bildenden Bereich umfasst,
- wobei eine Rückseite des einstückigen Rahmenbauteils (11), ausgenommen der das Staufach bildende Bereich, vollständig mit den Rippenstrukturen (RS3, RS4) versehen wird.

5. Verfahren nach Anspruch 4,
**dadurch gekennzeichnet, dass** das Organoblech erwärmt und anschließend mittels Pressen zu dem einstückigen Rahmenbauteil (11) umgeformt wird.

6. Verfahren nach Anspruch4 oder 5,
**dadurch gekennzeichnet, dass** das zu dem einstückigen Rahmenbauteil (11) umgeformte Organoblech in das Spritzwerkzeug eingelegt und mit einem Thermoplast zur Erzeugung der Rippenstruktur (RS1 bis RS4) zumindest teilweise umspritzt wird.

7. Verfahren nach einem der Ansprüche 4 bis 6,
**dadurch gekennzeichnet, dass** das Organoblech in das Spritzwerkzeug eingelegt wird, anschließend in dem Spritzwerkzeug erwärmt und zu dem einstückigen Rahmenbauteil (7, 8, 9, 11) umgeformt und anschließend mit einem Thermoplast zur Erzeugung der Rippenstruktur (RS1 bis RS4) zumindest teilweise umspritzt wird.

8. Verfahren nach einem der Ansprüche 4 bis 7,
**dadurch gekennzeichnet, dass** während der Umformung des Organoblechs zumindest eine Anschlussgeometrie aus- und/oder angeformt wird.

## Claims

1. Arm rest frame (1) comprising a plurality of frame components (7, 8, 9, 11), **characterized in that**
- the plurality of frame components (8, 9, 11) are formed from a one-piece organosheet,
- wherein the organosheet comprises a thermoplastic matrix, a woven fabric made of glass fibers, carbon fibers and/or aramid fibers or a mixed form thereof being introduced therein such that said fibers are completely coated and enclosed by thermoplastic material,
- wherein a rib structure (RS1 to RS4) is formed on the organosheet,
- wherein a material connection is formed between the organosheet and the rib structure (RS1 to RS4) and
the thermoplastic matrix and the rib structure (RS1 to RS4) are formed from the same material so that an integral frame component (11) is formed,
- wherein the integral frame component (11) comprises a region forming a storage compartment,
- wherein a rear face of the integral frame component (11), apart from the region forming the storage compartment, is entirely provided with the rib structures (RS3, RS4).

2. Arm rest frame (1) according to Claim 1, **characterized in that** at least one axle body (2, 3, 10) is arranged on the frame component (7, 8, 9, 11) for forming a pivot axis.

3. Arm rest comprising an arm rest frame (1) according to Claim 1 or 2.

4. Method for producing an arm rest frame (1) comprising a plurality of frame components (7, 8, 9, 11), **characterized in that** a plurality of frame components (8, 9, 11) are formed from an organosheet,
- wherein the organsheet comprises a thermoplastic matrix, a woven fabric made of glass fibers, carbon fibers and/or aramid fibers or a mixed form thereof being introduced therein such that said fibers are completely coated and enclosed by thermoplastic material,
- wherein a rib structure (RS1 to RS4) is integrally formed on the organosheet in an injection-molding tool,
- wherein a material connection is formed between the organosheet and the rib structure (RS1 to RS4) and the thermoplastic matrix and the rib structure (RS1 to RS4) are formed from the same material so that an integrated frame component (11) is formed
- wherein the integral frame component (11) comprises a region forming a storage compartment,
- wherein a rear face of the integral frame component (11), apart from the region forming the storage compartment, is entirely provided with the rib structures (RS3, RS4).

5. Method according to Claim 4, **characterized in that** the organosheet is heated and subsequently shaped by means of pressing to form the integral frame component (11).

6. Method according to Claim 4 or 5, **characterized in that** the organosheet shaped to form the integral frame component (11) is introduced into the injection-molding tool and at least partially encapsulated by being injection-molded with a thermoplastic material for producing the rib structure (RS1 to RS4).

7. Method according to one of Claims 4 to 6, **characterized in that** the organosheet is introduced into the injection-molding tool, subsequently heated in the injection-molding tool and shaped to form the integral frame component (7, 8, 9, 11) and subsequently at least partially encapsulated by being injection-molded with a thermoplastic material for producing the rib structure (RS1 to RS4).

8. Method according to one of Claims 4 to 7, **characterized in that** at least one connection geometry is shaped and/or integrally formed during the shaping of the organosheet.

## Revendications

1. Cadre d'accoudoir (1), comportant plusieurs composants de cadre (7, 8, 9, 11),
**caractérisé en ce que**
- lesdits plusieurs composants de cadre (8, 9, 11) sont formés à partir d'une tôle organique d'une seule pièce,
- dans lequel la tôle organique comporte une matrice thermoplastique, dans laquelle est introduite une étoffe en fibres de verre, de carbone et/ou d'aramide ou une forme mixte constituée de celles-ci, de telle sorte que celle-ci est mouillée et enveloppée complètement par une matière synthétique thermoplastique,
- dans lequel une structure nervurée (RS1 à RS4) est réalisée sur la tôle organique,
- dans lequel une liaison de matière est réalisée entre la tôle organique et la structure nervurée (RS1 à RS4) et la matrice thermoplastique et la structure nervurée (RS1 à RS4) sont formées à partir de la même matière, de sorte qu'un composant de cadre (11) d'une seule pièce soit formé,
- dans lequel le composant de cadre (11) d'une seule pièce comporte une région formant un compartiment de rangement,
- dans lequel un côté arrière du composant de cadre (11) d'une seule pièce, à part la région formant le compartiment de rangement, est doté complètement des structures nervurées (RS3, RS4).

2. Cadre d'accoudoir (1) selon la revendication 1,
**caractérisé en ce qu'**au moins un corps d'axe (2, 3, 10) est disposé sur le composant de cadre (7, 8, 9, 11) pour former un axe de pivotement.

3. Accoudoir, comportant un cadre d'accoudoir (1) selon la revendication 1 ou 2.

4. Procédé de fabrication d'un cadre d'accoudoir (1) comportant plusieurs composants de cadre (7, 8, 9, 11),
**caractérisé en ce que** plusieurs composants de cadre (8, 9, 11) sont formés à partir d'une tôle organique,
- dans lequel la tôle organique comporte une matrice thermoplastique, dans laquelle est introduite une étoffe en fibres de verre, de carbone et/ou d'aramide ou une forme mixte constituée de celles-ci, de telle sorte que celle-ci est mouillée et enveloppée complètement par une matière synthétique thermoplastique,
- dans lequel une structure nervurée (RS1 à RS4) est formée sur la tôle organique dans un outil d'injection,
- dans lequel une liaison de matière est réalisée entre la tôle organique et la structure nervurée (RS1 à RS4) et la matrice thermoplastique et la structure nervurée (RS1 à RS4) sont formées à partir de la même matière, de sorte qu'un composant de cadre (11) d'une seule pièce soit formé,
- dans lequel le composant de cadre (11) d'une seule pièce comporte une région formant un compartiment de rangement,
- dans lequel un côté arrière du composant de cadre (11) d'une seule pièce, à part la région formant le compartiment de rangement, est doté complètement des structures nervurées (RS3, RS4).

5. Procédé selon la revendication 4,
**caractérisé en ce que** la tôle organique est chauffée et ensuite déformée par pressage pour former le composant de cadre (11) d'une seule pièce.

6. Procédé selon la revendication 4 ou 5,
**caractérisé en ce que** la tôle organique déformée pour former le composant de cadre (11) d'une seule pièce est insérée dans l'outil d'injection et est enrobée par injection au moins partiellement avec une matière thermoplastique pour produire la structure nervurée (RS1 à RS4).

7. Procédé selon l'une des revendications 4 à 6,
**caractérisé en ce que** la tôle organique est insérée dans l'outil d'injection, est chauffée ensuite dans l'outil d'injection et est déformée pour former le composant de cadre (7, 8, 9, 11) d'une seule pièce et est ensuite enrobée par injection au moins partiellement avec une matière thermoplastique pour produire la structure nervurée (RS1 à RS4).

8. Procédé selon l'une des revendications 4 à 7,
**caractérisé en ce que**, pendant la déformation de la tôle organique, au moins une géométrie de raccordement est façonnée et/ou formée.
